# EUROPÄISCHE PATENTSCHRIFT

(11) **EP 2 223 984 B1**
(45) Veröffentlichungstag und Bekanntmachung des Hinweises auf die Patenterteilung: **06.12.2017**
(21) Anmeldenummer: 10006004.5
(22) Anmeldetag: 07.11.2008
(51) Int. Cl.: C09K 3/10, B65D 41/04, B65D 43/02, C08L 23/08

(54) **Press-on twist-off Gefäßverschluss**
Press-on twist-off closure
Fermeture Press-on twist-off

(30) Priorität: 09.11.2007 EP 07021782; 08.02.2008 EP 08002379
(43) Veröffentlichungstag der Anmeldung: 01.09.2010
(62) Teilanmeldung aus: 08848153.6
(73) Patentinhaber: ACTEGA DS GmbH, 28219 Bremen (DE)
(72) Erfinder: Poel-Asendorf, Christiane, 28844 Weyhe (DE); Wittenberg, Rüdiger, 28215 Bremen (DE); Schlenk, Georg, 27793 Wildeshausen (DE)
(74) Vertreter: Maiwald, Walter

(56) Entgegenhaltungen:
- EP-A1- 0 503 124
- WO-A-96/20878
- WO-A1-95/05427
- DE-A1- 1 782 737
- US-A1- 2006 199 911
- US-B1- 6 235 822

## Beschreibung

Die Erfindung betrifft einen Press-on twist-off® Gefäßverschluss für Gefäße mit einer durch den Gefäßverschluss zu verschließenden Öffnung mit einem Innendurchmesser von mehr als 2 cm, der ein Dichtungselement auf Polymerbasis umfasst, welches im Gefäßverschluss so angeordnet ist, dass es im Schließzustand dichtend an der Öffnung des Gefäßes anliegt.

Während die Industrie für die Dichtungseinlagen von Kronkorken oder Flaschenschraubverschlüssen seit längerem PVC-freie Compounds verwendet, werden für Schraubdeckel, Nockendrehverschlüsse, PT-Kappen und dergleichen, die als Gefäßverschlüsse für Gefäße mit einem größeren Innendurchmesser der Öffnung dienen, nach wie vor PVC-haltige Compounds eingesetzt. Üblicherweise werden solche PVC-haltigen Compounds bei Raumtemperatur in flüssiger Form, aus weichmacherhaltigen Systemen aufgetragen.

Es ist jedoch unerwünscht, PVC-haltige Compounds einzusetzen. Bei der üblichen Verbrennung von Haushaltsabfall entstehen aus Halogenkunststoffen säurehaltige Gase, deren Entweichen in die Atmosphäre schädlich ist. Außerdem erfordern solche PVC-basierenden Dichtungselemente den Einsatz von Weichmachern, die aus gesundheitlichen Gründen ebenfalls bedenklich sein können.

Es besteht daher ein Bedarf für Gefäßverschlüsse, die ein Dichtungselement auf Polymerbasis aufweisen, welches aber nicht auf PVC basiert, und die sich für Gefäße mit relativ großen Öffnungen, oberhalb von 2 cm Innendurchmesser, eignen.

Es ist eine wesentliche Aufgabe der Erfindung einen Press-on twist-off® Gefäßverschluss anzugeben, der ein Dichtungselement auf Polymerbasis umfasst, welches kein PVC enthält.

Grundsätzlich werden erfindungsgemäß Press-on twist-off® Gefäßverschlüsse für solche Gefäße bereitgestellt, deren durch den Gefäßverschluss zu verschließende Öffnung einen Innendurchmesser von mehr als 2 cm aufweist. Das entspricht einem Innendurchmesser, der größer ist als jener, den übliche Getränkeflaschen aufweisen, die mit Kronkorken, Schraubkappen und dergleichen in bekannter Weise verschlossen werden, wie beispielsweise in der EP-B1 0 503 124 beschrieben.

Besonders eignet sich die Erfindung für die Herstellung von relativ großen Gefäßverschlüssen, also für Gefäßöffnungen mit einem Innendurchmesser von mehr als 2,5 cm bis herauf zu solchen, bei denen der Innendurchmesser der zu verschließenden Öffnung größer als 4 cm ist.

Aus US 6,235,822 sind Gefäßverschlüsse mit einem Dichtungselement bekannt, das kein PVC enthält und einen Gehalt an Ethylen/Octen-Copolymer sowie EthylenAcrylsäure-Copolymer aufweist. PT-Kappen werden nicht beschrieben. Die Shore A-Härte des Compounds wird nicht angegeben, ebensowenig der Druckverformungrest (DVR).

Aus WO 96/20878 sind Gefäßverschlüsse der gleichen Art wie in US 6,235,822 bekannt. Auch hier finden sich keine Angaben zur Shore A-Härte und zum DVR des Compounds.

Aus WO 95/05427 sind Gefäßverschlüsse mit einem PVC-freien Dichtungselemnt auf Basis von LLDPE bekannt, wobei keine Angaben zur Shore A-Härte und zum DVR gemacht werden. PT-Kappen werden nicht erwähnt.

Die DE-OS 1782 737 offenbart Gefäßverschlüsse mit PVC-freien Dichtungselementen auf Basis von Polypropylen und Ethylen/Vinylacetat-Copolymeren, ohne Angabe der Shore A-Härte und des DVR. Auch hier werden keine PT-Kappen erwähnt.

Aus EP 0 503 124 sind Gefäßverschlüsse bekannt, deren Dichtungselemente kein PVC enthalten und auf Butylkautschuk, HDPE und EVA basieren. Häret und DVR sind nicht angegeben.

US 5,272,236 offenbart Filme und Fasern, die Ethylen/Alken-Copolymere enthalten, betrifft aber keine Gefäßverschlüsse.

Aus US 2006/19991 ist bekannt, Block-Copolymere von Ethylen und Octen für Dichungen, einschließlich solchen für Gefäßverschlüsse, einzusetzen. Dabei kann PVC mitverwendet werden. Sehr hohe Ölgehalte sind möglich. Dichtungselemente von Gefäßverschlüssen sind dabei stets geschäumt; Angaben zum DVR solcher Dichtungselemente werden nicht gemacht.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen zwar den dort genannten Behandlungen wie Pasteurisierung und Heißfüllung standhalten können, jedoch sind das thermisch weitaus weniger anspruchsvolle Verfahren als die Sterilisierung. Bei Pasteurisierung und Heißfüllung werden Temperaturen unterhalb 100°C eingesetzt; typische Sterilisierungsbedingungen sind 121°C oder sogar 132°C. Die erfindungsgemäß zu verwendenden Polymermaterialien sind in der Art maßgeschneidert, dass sie einerseits während des Pasteurisations- und Heißfüllprozesses und andererseits im Sterilisationsprozess ihre Dichtungswirkung im nötigen Umfang beibehalten.

Außerdem lassen sich nicht alle Compounds der in EP 0 503 124 beschriebenen Art ohne weiteres für größere Verschlüsse einsetzen. Obwohl in EP 0 503 124 angegeben ist, dass sich die dort beschriebenen Compounds auch für Schraubdeckel und dergleichen eignen, ist dies oft nur der Fall, wenn die Verarbeitungseigenschaften entsprechend abgewandelt werden - insbesondere durch den Zusatz von Strecköl, um die Fließfähigkeit zu verbessern. Das ist nicht immer erwünscht, z. B. im Hinblick auf die Gefahr der Migration von Compound-Bestandteilen in fetthaltige Nahrungsmittel.

PVC-freie Materialien, die keine Weichmacher aufweisen, müssen in thermisch ausreichend erweichter Form aufgetragen werden. Durch Rotation des Rohlings und Einspritzen des Materials, wie bei PVC-Plastisolen, lässt sich eine solche Dichtung nicht erzeugen. Dies erfordert vielmehr beispielsweise Extrusion und entsprechende Formgebung.
Grundsätzlich wird gemäß dem erfindungsgemäßen Herstellungsverfahren von einem Gefäßverschluss-Rohling aus Metall oder Kunststoff ausgegangen, der vorzugsweise zunächst auf seiner Innenseite mit einem geeigneten Primer vorbehandelt wird.

Insbesondere eignet sich hierfür ein TPE-Lack, etwa der von der Firma Rhenania entwickelte Primer-Lack, auf dem die erfindungsgemäß am meisten bevorzugten Compounds besonders gut haften.

Alternativ dazu kann man eine geeignete Primerbeschichtung durch Laminierung, Kaschierung oder eventuell auch durch Co-Extrusion aufbringen.

Auf den so vorbehandelten Rohling wird innenseitig das Polymermaterial, das die Dichtung bilden soll, in thermisch fließfähig gemachter Form aufgetragen. Insbesondere eignet sich hierfür eine Extrusion, bei welcher das Dichtungscompound im Temperaturbereich zwischen 100°C und 260°C vorgelegt wird.

Die Extrusion kann etwa in die Mitte der Rohling-Innenfläche erfolgen, wenn die Dichtungseinlage kreisscheibenförmig ausgebildet sein soll.

Nachfolgend wird das kreisschreibenförmige Dichtungselement aus dem extrudierten, noch fließfähigen Material durch entsprechende Stempelung (analog dem bekannten SACMI-Verfahren) geformt.

In abgewandelter Form kann das Dichtungselement außerhalb des Verschlusses oder Verschlussrohlings durch Verstempelung eines geeigneten Polymermaterials geformt und anschließend in den Verschluss oder Rohling eingebracht werden. Dieses Verfahren ist ebenfalls durch SACMI für kleine Verschlüsse als outshell-moulding bekannt.

Das erfindungsgemäße Verfahren hat, wie ersichtlich, gegenüber dem bekannten Plastisol-Verfahren den weiteren Vorteil, dass die Dichtungseinlage durch die Formgebung (stempeln) bereits völlig fertig gestellt ist und nicht, wie beim Einspritzen von Plastisol, eine anschließende Aushärtung im Ofen erforderlich ist.

Wenn das entsprechend ausgeformte Dichtungselement kreisscheibenförmig ist, wird man vorzugsweise im Mittelbereich des Verschlusses, der keine Dichtungswirkung hat, weil er innerhalb der Gefäßmündung liegt, eine Dicke von etwa 0,1 - 0,2 mm für das Dichtungselement vorsehen.

Wenn der Gefäßverschluss völlig eben ist, wird das Dichtungselement daher auch in seinem Dichtungsbereich eine entsprechende Dicke haben.

Hat der Gefäßverschluss hingegen in dem Bereich, der der Mündung des zu verschließenden Gefäßes entspricht, eine Vertiefung ("Kanal"), so wie dies bei Verschlüssen mit PVC-basierenden Plastisol-Dichtungen regelmäßig der Fall ist, dann wird das Dichtungselement in diesem Bereich eventuell dicker sein. Wegen der größeren Elastizität eines dickeren Dichtungselementes kann das von Vorteil sein. In solchen Fällen ist das Dichtungselement in seinem dichtenden Bereich oft vorzugsweise etwa 1 mm dick.

Man kann im Bereich des Dichtungselementes, der dichtend mit der Gefäßmündung in Kontakt kommt, auch eine aufwändigere Formgebung vorsehen und insbesondere eine oder mehrere Dichtungslippen ausformen. Das kann durch entsprechende Formgebung beim Verstempeln des Extrudats geschehen. Im Bereich solcher Dichtungslippen kann das Dichtungselement dann eine entsprechend größere Dicke aufweisen und beispielsweise bis zu 3 mm dick sein.

Für die Realisierung der Erfindung dienen die im Anspruch 1 genannten Compounds auf der Basis von thermoplastischen Elastomeren.

Für den jeweiligen konkreten Verwendungszweck kann das Compound hinsichtlich Shore-Härte, Elastizitätsmodul, rheologischen Eigenschaften und dergleichen durch im Stand der Technik bekannte Maßnahmen eingestellt werden.

Es ist möglich, die erfindungsgemäßen Dichtungseinlagen mit im Prinzip bekannten Maßnahmen auszustatten, die eine Barrierewirkung gegenüber Sauerstoff und Geschmackschädlingen wie Trichloranisol bewirken. Ebenso lassen sich die erfindungsgemäßen Dichtungselemente, wiederum analog bekannter Maßnahmen, mit den gewünschten Druckhaltungs- bzw. Überdruckventileigenschaften versehen.

Vorteilhaft werden die erfindungsgemäßen Gefäßverschlüsse so ausgestattet, dass sie eine Vakuumretention der Art zeigen, wie sie gegenwärtig von bekannten Verschlüssen bereitgestellt wird.

Die erwünschte Vakuumretention ist grundsätzlich das Ausmaß, in dem ein anfänglich vorgegebenes Vakuum im nicht befüllten Teil des verschlossenen Gefäßes auch nach der Pasteurisation bzw. Sterilisation und der Dauer der nachfolgenden Mindest-Lagerungsfähigkeit des Produktes noch besteht. Zum Beispiel kann verlangt sein, dass in einem verschlossenen Glasbehälter, der ein Lebensmittel enthält, ein anfänglicher Innendruck von weniger als 0,2 bar besteht, und bis zum Ende der Mindest-Lagerungsfähigkeit (Mindest-Haltbarkeitsdauer) der Innendruck nicht größer als 0,2 bar wird.

Typischerweise misst man die Vakuumretention, in dem nach dem Pasteurisieren oder Sterilisieren bei einer Stichprobe von Gefäßen der Deckel durchstochen und so der Innenraum mit einem Manometer verbunden wird. Der Innendruck wird abgelesen und aufgezeichnet. Bei einer anderen Stichprobe kann jetzt z. B. der Verlauf der Mindest-Haltbarkeitsdauer durch Behandlung mit Dampf bei erhöhter Temperatur simuliert werden ("accelerated ageing"). Danach wird der resultierende Innendruck, wie bei der ersten Stichprobe, gemessen. An dem Vergleich der Ergebnisse lässt sich erkennen, ob das Produkt den Anforderungen entspricht. Wenn bei einer zu großen Anzahl von Gefäßen der Stichproben der zulässige Innendruck überschritten wird, ist dies nicht der Fall.

Speziell betrifft die vorliegende Erfindung Press-on twist-off®-Gefäßverschlüsse aus Metall oder Kunststoff für Gefäße zur Aufnahme von Getränken oder Nahrungsmitteln mit einer Dichtungseinlage, deren Material so gewählt ist, dass die gesundheitlich bedenkliche Migration von Materialbestandteilen in das Getränk oder Nahrungsmittel verhindert wird.

Besonderes relevant sind diese Anforderungen bei Babynahrung, die typischerweise in Gläsern mit Press-on twist-off®-Verschlüssen verkauft wird.

Diese Migration von Bestandteilen der Verpackung (zu der gegebenenfalls auch die Dichtungseinlage des Gefäßverschlusses gehört) in das Nahrungsmittel ist nicht nur generell unerwünscht, sondern auch durch gesetzliche Bestimmungen scharf reglementiert. Beispiele solcher Bestimmungen sind die EC-Direktiven 1935/2004, 2023/2006, 2002/72/EG und 372/2007.

Die Messung des Ausmaßes der gegebenenfalls beobachteten Migration erfolgt mittels Verfahren, wie sie insbesondere in der DIN EN 1186 definiert sind. Solche Verfahren finden auch im Kontext der vorliegenden Erfindung Anwendung.
Es ist kein triviales Problem, Gefäßverschlüsse der hier betrachteten Art mit PVC-freien Dichtungseinlagen zu versehen, wenn diese Verschlüsse den genannten Bestimmungen hinsichtlich der eventuellen Migration ihrer chemischen Bestandteile entsprechen müssen.

Für kleine Gefäßverschlüsse sind bereits Dichtungseinlagen mit Barrierewirkung gegenüber bestimmten Kontaminanten verwendet worden, wie sie z. B. in EP 0 503 124 beschrieben sind.

Jedoch sind die Anforderungen an die Dichtungs-Materialien bei Gefäßverschlüssen für größere Innendurchmesser der Gefäßöffnung gegebenenfalls anspruchsvoller. Für solche Einsatzzwecke kommt es besonders darauf an, eine ausreichende Fließfähigkeit des Polymermaterials bei der Herstellung des Dichtungselementes zu verbinden mit ausreichenden Dichtungseigenschaften im verschlossenen Zustand; hierzu gehört auch die heute erforderliche Dichtigkeit gegenüber dem Eindringen bzw. dem Entweichen von Gasen, gegebenenfalls kombiniert mit einer Überdruckventilwirkung, die das Platzen des Gefäßes beim Erwärmen oder bei der Entwicklung von Überdruck im Gefäß aus anderen Gründen verhindert. Zudem wird aber gerade für die typischen Einsatzzwecke von Gefäßen mit größeren Öffnungsdurchmessern (beispielsweise Konserven) verlangt, dass das Dichtungselement auch unter Sterilisierungsbedingungen einsetzbar ist.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen zwar den dort genannten Behandlungen wie Pasteurisierung und Heißfüllung standhalten können, jedoch sind das thermisch weitaus weniger anspruchsvolle Verfahren als die Sterilisierung. Bei Pasteurisierung und Heißfüllung werden Temperaturen unterhalb 100°C eingesetzt; typische Sterilisierungsbedingungen sind 121°C oder sogar 132°C. Die erfindungsgemäß zu verwendenden Polymermaterialien sind so maßgeschneidert, dass sie einerseits für die Pasteurisierung oder Heißfüllung geeignet sind und andererseits unter den höheren Temperaturen der Sterilisierung ihre Dichtungswirkung im nötigen Umfang beibehalten.

Außerdem müssen die Dichtungen den oben genannten Anforderungen hinsichtlich der eventuellen Migration chemischer Bestandteile entsprechen.

Die vorbekannten Compounds lassen sich oft nicht zu größeren Dichtungseinlagen verarbeiten, weil ihre Fließeigenschaften dies verhindern.

Um die Verarbeitung herkömmlicher Compounds zu erleichtern, werden diesen üblicherweise Streckmittel und/oder Weichmacher zugesetzt. Insbesondere werden dafür bei Anwendungstemperatur flüssige Komponenten wie Strecköle (vorzugsweise Weißöl) verwendet.

Es hat sich nun überraschend gezeigt, dass sich solche Compounds zwar, gegebenenfalls nach Modifikation der Rezeptur, auch zu Dichtungseinlagen mit größeren Durchmessern verarbeiten lassen, dass die damit ausgestatteten Gefäßverschlüsse aber den gesetzlichen Bestimmungen hinsichtlich der Migration chemischer Bestandteile nicht immer genügen.

Es ist eine wesentliche Aufgabe der Erfindung, Press-on twist-off® Gefäßverschlüsse mit einer geeigneten Dichtungseinlage anzugeben, welches es ermöglicht, den Gefäßverschluss mit einem Dichtungselement auf Polymerbasis zu versehen, welches kein PVC enthält und den gesetzlichen Vorschriften hinsichtlich der Migration von Verpackungskomponenten entspricht.

Die Erfindung löst diese Aufgabe mitels der in Anspruch 1 definierten Merkmalskombination.
Grundsätzlich werden erfindungsgemäß Gefäßverschlüsse für solche Gefäße bereitgestellt, deren durch den Gefäßverschluss zu verschließende Öffnung einen Innendurchmesser von mehr als 2 cm aufweist. Das entspricht einem Innendurchmesser, der größer ist als jener, den übliche Getränkeflaschen aufweisen, die mit Kronkorken, Schraubkappen und dergleichen in bekannter Weise verschlossen werden, wie beispielsweise in der EP-B1 0 503 124 beschrieben. Besonders eignet sich die Erfindung für die Herstellung von relativ großen Gefäßverschlüssen, also für Gefäßöffnungen mit einem Innendurchmesser von mehr als 2,5 cm bis herauf zu solchen, bei denen der Innendurchmesser der zu verschließenden Öffnung größer als 4 cm ist.

Spezifischer handelt es sich bei der Erfindung grundsätzlich um Press-on twist-off®-Verschlüsse, auch bekannt als PT-Kappen aus Metall oder Kunststoff für Gefäße zur Aufnahme von Getränken oder Nahrungsmitteln, die vor der Migration von Verpackungsbestandteilen entsprechend den gesetzlichen Vorschriften geschützt werden müssen. Das sind beispielsweise ölhaltige oder fetthaltige Nahrungsmittel, wie beispielsweise Fertignahrung, insbesondere aber ölhaltige Saucen und Gewürzpasten, beispielsweise Currypaste. In den Öl- und Fettbestandteilen solcher Nahrungsmittel lösen sich Streckmittel wie Weißöl, aber auch Weichmacherbestandteile besonders leicht.

Um einen dichten Verschluss des Gefäßes zu gewährleisten, verfügen die erfindungsgemäßen Gefäßverschlüsse über eine Dichtungseinlage, die den weiter oben genannten Anforderungen hinsichtlich ihrer Verarbeitbarkeit einerseits, ihrer Dichtungseigenschaften andererseits entspricht und die auch die gesetzlichen Anforderungen hinsichtlich der Migration von Verpackungskomponenten erfüllt.

Um dies zu erreichen, ist das Material der Dichtungseinlage so gewählt, dass die Migration von Bestandteilen des Materials in das Getränk oder Nahrungsmittel verhindert wird.

Als Hauptbestandteil umfasst das Material der Dichtungseinlage eine polymere Komponente wie in Anspruch 1 dfiniert, die seine wesentliche Struktur bildet. Die Eigenschaften dieser hauptsächlichen polymeren Komponente können durch die Beimischung weiterer Komponenten, beispielsweise weiterer Polymere, geeignet modifiziert werden.

Jedoch ist erfindungsgemäß vorgesehen, dass das Material der Dichtungseinlage nur sehr geringe Gehalte von Bestandteilen aufweist, die bei Anwendungstemperatur flüssig sind. Die Anwendungstemperatur ist üblicherweise gleich der Umgebungstemperatur, also im Bereich üblicher Umgebungstemperaturen im Freien bzw. in beheizten Räumen.

Erfindungsgemäß werden daher dem Material der Dichtungseinlage nur geringe oder vorzugsweise gar keine Gehalte an flüssigen Streckmitteln wie insbesondere Weißöl zugesetzt.

In bevorzugten Ausführungsformen enthält das Material nicht mehr als 10 %, vorzugsweise nicht mehr als 7%, insbesondere nicht mehr als 4% und besonders bevorzugt nicht mehr als 1% solcher flüssigen Bestandteile.

Es ist gegenwärtig am meisten bevorzugt, dass das Material innerhalb der zum Anmeldungszeitpunkt gegebenen analytischen Bestimmungsgrenzen überhaupt keine bei Anwendungstemperatur flüssigen Bestandteile enthält.

Weiterhin wird es bevorzugt, dass das Material der Dichtungseinlage keine Weichmacher enthält.

Da sich Compounds für solche Dichtungseinlagen gegebenenfalls ohne Streckmittelzusatz nur schwer verarbeiten lassen, insbesondere wenn der Durchmesser des Gefäßverschlusses 2 cm überschreitet, wenn das Material etwa wie in EP 0 503 124 beschrieben, auf der Basis von styrolhaltigen Block-Copolymeren mit elastomeren Kettenabschnitten aufgebaut ist, werden gemäß der Erfindung vorzugsweise solche Materialien verwendet, die diese Polymere nicht enthalten.

Es ist daher bevorzugt, wenn das Material, aus dem die Dichtungseinlage geformt wird, weder die genannten flüssigen Streckmittel, noch Weichmacher, noch styrolhaltige Block-Copolymere mit elastomeren Kettenabschnitten enthält.

Stattdessen ist das Polymermaterial, das den Hauptbestandteil der Dichtungseinlage bildet, auf bestimmten Polyalkylenen aufbaut, die sich ohne Streckmittel und dergleichen auch zu Dichtungseinlagen für Gefäßverschlüsse mit Durchmessern von mehr als 2 cm verarbeiten lassen.

Gemäß der Erfindung handelt es sich dabei um ein Copolymer, das einerseits Polyethyleneinheiten umfasst, und andererseits aus einem Alken-Monomeren aufgebaut worden ist, welches aus Propen, Buten, Hexen und (insbesondere) Okten ausgewählt worden ist.

Solche Copolymere lassen sich mittels Metallocen-Katalysatoren gezielt mit den gewünschten physikalischen Eigenschaften erzeugen.

Dabei hat das genannte Material eine Shore A Härte von 40-90 und insbesondere eine Härte von 60-75. Der Druckverformungsrest bestimmt nach ASTM D 395 (70°C, 22h, 25% Kompression) liegt in einem Bereich von 30-70% und bevorzugt zwischen 30 und 50%.

Geeignete Polymere sind in EP 0 714 426 beschrieben. Dort wird angegeben, dass sich diese Polymere als solche auch zu Dichtungseinlagen verarbeiten lassen, wobei keinerlei Zusätze erfolgen sollen (S. 2, Z. 26 - 28). Das Problem der Migration von Materialbestandteilen wird hier nicht angesprochen.

Eine beispielhafte Rezeptur umfasst:
Ethylen-Okten-Copolymer mit den o.g. Eigenschaften: 45%

| | |
|---|---|
| EVA (14%VA): | 40% |
| Hochfließfähiges PP: | 14% |
| Stabilisatoren (IRGANOX 1010, IRGAFOS 168): | 0,2% |
| Gleitmittel (Erucasäureamid): | 0,2% |
| Gleitmittel (Ölsäureamid): | 0,2% |
| Pigment: | 0,4% |

Im Zusammenhang mit den gesetzlichen Vorschriften müssen Migrationstests erfolgen, die an den erfindungsgemäßen Gefäßverschlüssen in der Art und Weise durchgeführt werden, wie in der DIN EN 1186 beschrieben sind. Auf eine Wiedergabe dieser Messverfahren im Kontext der vorliegenden Anmeldung wird daher verzichtet; diese Tests werden durch Bezugnahme auf die DIN EN 1186 in den Offenbarungsgehalt der vorliegenden Anmeldung einbezogen.

Durch die Verwendung des genannten Polymermaterials wird erfindungsgemäß erreicht, dass die solchermaßen hergestellte Dichtungseinlage nicht nur unproblematisch hergestellt werden kann und die Dichtungseigenschaften aufweist, die eingangs beschrieben worden sind. Darüber hinaus sind solche Gefäßverschlüsse auch nicht nur pasteurisierbar, sondern auch sterilisierbar, und sie erfüllen die genannten europarechtlichen Vorschriften hinsichtlich der Migration von Bestandteilen des Polymermaterials in das Getränk oder Nahrungsmittel, das im erfindungsgemäß verschlossenen Gefäß enthalten ist.

Insoweit bilden die Vorschriften der genannten europarechtlichen Direktiven, insbesondere im Zusammenhang mit den Testkriterien der DIN EN 1186, geeignete Auswahlkriterien für das Polymermaterial, das sich aus der Vielzahl grundsätzlich denkbarer Compounds durch Verzicht auf bei Anwendungstemperatur flüssige Bestandteile und nachfolgendes Testen auffinden lässt.

## Patentansprüche

1. Press-on twist-off® Gefäßverschluss aus Metall oder Kunststoff für Gefäße mit einer durch den Gefäßverschluss zu verschließenden Öffnung mit einem Innendurchmesser von mehr als zwei cm, der ein PVC-freies Dichtungselement auf Polymerbasis umfasst, welches im Gefäßverschluss so angeordnet ist, dass es im Schließzustand dichtend an der Öffnung des Gefäßes anliegt, bei dem ein Polymercompound durch Erwärmung ausreichend fließfähig gemacht und im Bereich des zu erzeugenden Dichtungselementes auf den Gefäßverschluss aufgetragen sowie mechanisch in die gewünschte Form gebracht wird, die es nach Erkalten beibehält, wobei das Material des Dichtungselements so gewählt ist, dass die Migration von Bestandteilen des Materials in das Getränk oder Nahrungsmittel verhindert wird, und das Material als Hauptbestandteil wenigstens eine polymere Komponente umfasst, die zur Dichtungswirkung des Dichtungselements beiträgt, und das Material im wesentlichen frei von bei Anwendungstemperatur flüssigen Bestandteilen ist,
**dadurch gekennzeichnet, dass** die Shore A Härte des Polymercompounds zwischen 40 und 90 liegt und
das Polymercompound beim Druckverformungstest bestimmt nach ASTM nach 22 Stunden Lagerung bei 70°C und einer Kompression von 25% einen Druckverformungstest zwischen 30 % und 70% aufweist, und
das Polymercompound ein Copolymer enthält, das einerseits Polyethyleneinheiten umfasst und andererseits aus einem Alken-Monomeren aufgebaut ist, welches aus Propen, Buten, Hexen und insbesondere Octen ausgewählt ist.

2. Verschluss nach Anspruch 1, **dadurch gekennzeichnet, dass** das Polymercompound eine Shore A Härte von 60-75 hat.

3. Verschluss nach Anspruch 1 oder 2, **dadurch gekennzeichnet, dass** das Polymercompound nicht mehr als 10 %, vorzugsweise nicht mehr als 7 %, insbesondere nicht mehr als 4 % und besonders bevorzugt nicht mehr als 1 % von bei Anwendungstemperatur flüssigen Bestandteilen, insbesondere Weißöl, enthält.

4. Verschluss nach Anspruch 3, bei dem das Copolymer mittels Metallocen-Katalysatoren erzeugt worden ist.

5. Verschluss nach einem der vorstehenden Ansprüche, **dadurch gekennzeichnet, dass** das Polymercompound so ausgebildet ist, dass das Dichtungselement unter Pasteurisationsbedingungen (bei bis zu 98°C) einsetzbar ist.

6. Verschluss nach einem der vorstehenden Ansprüche, **dadurch gekennzeichnet, dass** das Polymercompound so ausgebildet ist, dass das Dichtungselement unter Sterilisierungsbedingungen (bei 121 °C, vorzugsweise bei 132 °C) einsetzbar ist.

7. Verschluss nach einem der vorstehenden Ansprüche, **dadurch gekennzeichnet, dass** der Gefäßverschluss im Schließzustand eine Gas-Barrierewirkung und/oder eine Überdruckventilwirkung aufweist.

8. Verschluss nach einem der vorstehenden Ansprüche, **dadurch gekennzeichnet, dass** der Gefäßverschluss im Schließzustand eine Vakuumsretention zeigt.

9. Verschluss nach einem der vorstehenden Ansprüche, bei dem das Polymermaterial als Granulat bereitgestellt und mittels eines Extruders erwärmt wird.

10. Verschluss nach Anspruch 1, **dadurch gekennzeichnet, dass** der Gefäßverschluss einem Innendurchmesser der Gefäßöffnung von mehr als 2,5 cm, vorzugsweise mehr als 3 cm, mehr bevorzugt von mindestens 3,5 cm und besonders bevorzugt von mindestens 4 cm entspricht.

11. Verschluss nach einem der Ansprüche 1 - 10, **dadurch gekennzeichnet, dass** das Dichtungselement unter Pasteurisierungsbedingungen (bei bis 98°C) einsetzbar ist und das Polymercompound ein Copolymer enthält, das einerseits Polyethyleneinheiten umfasst und andererseits aus einem Alken-Monomeren aufgebaut ist, welches aus Propen, Buten, Hexen und insbesondere Octen ausgewählt ist.

12. Verschluss nach Anspruch 11, bei dem das Copolymer mittels Metallocen-Katalysatoren erzeugt worden ist.

13. Verschluss nach einem der vorstehenden Ansprüche, **dadurch gekennzeichnet dass**, das Polymercompound innenseitig auf einem einen Gefäßverschluss-Rohling aus Metall aufgetragen wird.

## Claims

1. A press-on twist-off® vessel closure of metal or plastic, for vessels with an opening, to be closed by said vessel closure, with an inner diameter of more than two cm, said vessel closure comprising a sealing element based on polymers, which is free of PVC and arranged in the vessel closure that it sealingly abuts the opening of the vessel in the closed state, wherein a polymer compound is made sufficiently flowable by warming and is provided to the vessel closure in the area of the sealing element to be formed and is mechanically brought into the desired shape which it retains after cooling; wherein the material of the sealing element is selected such that it prevents the migration of components of said material into the food or beverage, and wherein the material comprises at least one polymeric component as the main ingredient, said polymeric compound contributing to the sealing effect and said material being substantially free of components which are liquid at application temperature,
**characterized in that** the shore A hardness of the polymer compound is between 40 and 90;
that the polymer compound has a compression set between 30 % and 70 %, determined in accordance with ASTM at 22 h storage at 70°C and a compression of 25 %, and
that the polymer compound comprises a copolymer which on the one hand comprises polyethylene units and on the other hand is built from an alkene monomer selected from propene, butane, hexane and especially octane.

2. The closure of claim 1 **characterized in that** the polymer compound has a Shore A hardness of 60 to 75.

3. The closure of claims 1 or 2, **characterized in that** the polymer compound does not comprise more than 10 %, preferably not more than 7 %, specifically not more than 4 % and especially preferred not more than 1 % of components which are liquid at application temperature, especially white oil.

4. The closure of claim 3, wherein the copolymer has been produced by metallocene catalysts.

5. The closure of any one of the preceding claims, **characterized in that** the polymer compound is embodied such that the sealing element is usable under conditions of pasteurization (at up to 98°C).

6. The closure of any one of the preceding claims, **characterized in that** the polymer compound is embodied such that the sealing element is usable under conditions of sterilization (above 98°C, more specifically from 121°C, and preferably at 132°C).

7. The closure of any one of the preceding claims, **characterized in that** the vessel closure provides a gas barrier function and/or a safety valve function, in the closed state.

8. The closure of any one of the preceding claims, **characterized in that** the vessel closure provides vacuum retention, in the closed state.

9. The closure of any one of the preceding claims, wherein the polymer material is provided as a granulate and is warmed by means of an extruder.

10. The closure of claim 1, **characterized in that** the vessel closure corresponds to an inner diameter of the vessel opening of more than 2,5 cm, preferably more than 3 cm, more preferred of at least 3,5 cm and especially preferred of at least 4 cm.

11. The closure of any one of claims 1 - 10, **characterized in that** the sealing element is usable under pasteurization conditions (at up to 98°C) and the polymer compound comprises a copolymer which o n the one hand comprises polyethylene units and on the other hand is built from an alkene monomer selected from propene, butane, hexane and, especially, octane.

12. The closure of claim 11 wherein the copolymer has been produced by metallocene catalysts.

13. The method of any one of the preceding claims, **characterized in that** the polymer compound is applied to the interior of a vessel closure precursor made of metal.

## Revendications

1. Fermeture de récipient Press-On Twist-Off® en métal ou en matière plastique pour des récipients avec une ouverture, à obturer par la fermeture, d'un diamètre intérieur de plus de deux cm, laquelle fermeture comprend un élément d'étanchéité exempt de PVC à base de polymère, disposé dans la fermeture du récipient de sorte qu'il s'applique hermétiquement, dans l'état de fermeture, sur l'ouverture du récipient, pour laquelle un composé polymère est rendu suffisamment fluide par chauffage et appliqué sur la fermeture du récipient dans la zone de l'élément d'étanchéité à produire, ainsi qu'amené mécaniquement dans la forme souhaitée, qu'il conserve après le refroidissement, le matériau de l'élément d'étanchéité étant choisi de sorte qu'il empêche la migration de constituants du matériau dans la boisson ou le produit alimentaire, et le matériau comprenant, en tant que constituant principal, au moins un composant polymère, qui contribue à l'effet hermétique de l'élément d'étanchéité, et le matériau étant essentiellement exempt de constituants liquides à la température d'utilisation,
**caractérisée en ce que** la dureté Shore A du composé polymère se situe entre 40 et 90 et
le composé polymère, lors de l'essai de déformation sous pression défini suivant ASTM, après 22 heures de stockage à 70°C et sous une compression de 25%, présente une déformation résiduelle sous compression comprise entre 30% et 70%, et
le composé polymère renferme un copolymère, qui comprend d'un côté des unités de polyéthylène et est basé de l'autre côté sur un monomère d'alcène, sélectionné parmi le propène, le butène, l'hexène et en particulier l'octène.

2. Fermeture selon la revendication 1, **caractérisée en ce que** le composé polymère a une dureté Shore A de 60 - 75.

3. Fermeture selon l'une des revendications 1 et 2, **caractérisée en ce que** le composé polymère ne renferme pas plus de 10%, de préférence pas plus de 7%, en particulier pas plus de 4%, et de façon particulièrement préférentielle pas plus de 1%, de constituants liquides à la température d'utilisation, en particulier de l'huile blanche.

4. Fermeture selon la revendication 3, pour laquelle le copolymère a été produit au moyen de catalyseurs métallocènes.

5. Fermeture selon l'une des revendications précédentes, **caractérisée en ce que** le composé polymère est fabriqué de sorte que l'élément d'étanchéité est utilisable dans des conditions de pasteurisation (à des températures de jusqu'à 98°C).

6. Fermeture selon l'une des revendications précédentes, **caractérisée en ce que** le composé polymère est fabriqué de sorte que l'élément d'étanchéité est utilisable dans des conditions de stérilisation (au-dessus de 98°C, spécialement à partir de 121°C, de préférence à 132°C).

7. Fermeture selon l'une des revendications précédentes, **caractérisée en ce que** la fermeture de récipient présente, dans l'état de fermeture, un effet de barrière de gaz et/ou un effet de soupape de sûreté.

8. Fermeture selon l'une des revendications précédentes, **caractérisée en ce que** la fermeture de récipient présente une rétention sous vide dans l'état de fermeture.

9. Fermeture selon l'une des revendications précédentes, dans laquelle le matériau polymère est préparé sous forme de granulat et est chauffé au moyen d'une extrudeuse.

10. Fermeture selon la revendication 1, **caractérisée en ce que** la fermeture du récipient correspond à un diamètre intérieur de l'ouverture du récipient de plus de 2,5 cm, de préférence de plus de 3 cm, plus préférentiellement d'au moins 3,5 cm, et de façon particulièrement préférentielle d'au moins 4 cm.

11. Fermeture selon l'une des revendications 1 - 10, **caractérisée en ce que** l'élément d'étanchéité est utilisable dans des conditions de pasteurisation (de jusqu'à 98°C) et le composé polymère renferme un copolymère, qui comprend d'un côté des unités de polyéthylène et est basé de l'autre côté sur un monomère d'alcène, sélectionné parmi le propène, le butène, l'hexène et en particulier l'octène.

12. Fermeture selon la revendication 11, pour laquelle le copolymère a été produit au moyen de catalyseurs métallocènes.

13. Fermeture selon l'une des revendications précédentes, **caractérisée en ce que** le composé polymère est appliqué du côté intérieur sur une ébauche de fermeture de récipient en métal.
